(19) Europäisches Patentamt

European Patent Office

Office européen des brevets

(11) **EP 1 204 014 B1**

(12) **EUROPÄISCHE PATENTSCHRIFT**

(45) Veröffentlichungstag und Bekanntmachung des Hinweises auf die Patenterteilung:
**23.08.2006 Patentblatt 2006/34**

(21) Anmeldenummer: **01123815.1**

(22) Anmeldetag: **05.10.2001**

(51) Int Cl.:
*G05D 23/19* (2006.01)    *G05B 13/02* (2006.01)

(54) **Regelung für Fussbodenheizungen oder kombinierte Fussboden- und Radiatorheizungen**

Control system for floor heating or combined floor/radiator heating

Régulation pour un chauffage par le sol ou un chauffage mixte sol/radiateurs

(84) Benannte Vertragsstaaten:
**AT CH DE LI**

(30) Priorität: **06.11.2000 DE 10054897**

(43) Veröffentlichungstag der Anmeldung:
**08.05.2002 Patentblatt 2002/19**

(73) Patentinhaber: **Techem Energy Services GmbH**
**65760 Eschborn (DE)**

(72) Erfinder:
• **Ohl, Jochen, Dr.-Ing.**
**64823 Gross-Umstadt (DE)**

• **Kähler, Arne, Dr.-Ing.**
**12683 Berlin (DE)**

(74) Vertreter: **KEIL & SCHAAFHAUSEN**
**Patentanwälte**
**Cronstettenstrasse 66**
**60322 Frankfurt am Main (DE)**

(56) Entgegenhaltungen:
EP-A- 0 280 752      EP-A- 0 790 471
WO-A-00/49472      DE-A- 3 113 521
DE-A- 3 539 327      DE-A- 3 708 449
DE-A- 19 537 466      DE-A- 19 601 232
DE-A- 19 650 892      DE-B- 2 916 169
DE-U- 29 820 945      FR-A- 2 740 863

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die Erfindung betrifft eine Regelung für Fußbodenheizungen oder kombinierte Fußboden- und Radiatorheizungen.

Fußbodenheizungen sind ein typischer Bestandteil heutiger Heizungsanlagen. Mit dem Einsatz von Fußbodenheizungen beabsichtigt man, Umweltenergie oder Abwärme mit niedrigem Temperaturniveau zu nutzen, den Energieinhalt eines Wärmeträgers weitgehend zu verwerten und Wärmeverluste durch verminderte Raumtemperaturen zu senken. Der Gesetzgeber hat in der Neufassung der Heizungsanlagen-Verordnung (§ 7 Abs. 2 HeizAnlV) auch für Fußbodenheizungen eine Einzelraumtemperaturregelung vorgeschrieben, die entsprechend von nahezu allen Fußbodenheizungsherstellern angeboten wird.

Die Regelung der Raumtemperatur in Räumen mit Fußbodenheizung erfolgt hierbei vorrangig in Form einer Zwei-Punkt-Regelung. Als Stellglieder werden elektrothermische Zwei-Punkt-Stellantriebe verwendet. In seltenen Fällen wird eine Stetig-PI-Regelung mit entsprechenden elektromotorischen bzw. modifizierten elektrothermischen Stellantrieben eingesetzt. Außerdem sind die Reglerparameter nicht in jedem Arbeitspunkt optimal eingestellt.

Kombinierte Systeme, bestehend aus einer Kombination von Fußboden- und Radiatorheizung, werden meist derart betrieben, dass die Fußbodenheizung eine Grundlast und die Radiatorheizung mit den Heizkörpern die Spitzenlast abdeckt. Die Regelung von Fußboden- und Radiatorheizung erfolgt jedoch getrennt.

Aus der DE 196 01 232 A1 ist ein Steller für einen Zwei- oder Dreipunktregler bekannt, der das Stellglied mittels Pulsweitenmodulation ansteuert. Der Steller wandelt das stetige Ausgangssignal $y_R$ des Reglers in ein pulsweitenmoduliertes Zwei-Punkt-Signal um. Dem Steller wird ein Zeitintervall $P_{max}$ zugeordnet, das größer oder gleich der zeitlichen Dauer des längsten Pulses $P_i$ ist, der von dem Steller abgegeben wird. Der Steller erzeugt einen EIN-Befehl, wenn die Reglerausgangsgröße $y_R$ einen Schwellwert $a_i$ über- und/oder unterschreitet. Die Länge des Pulses ergibt sich aus dem fest vorgegebenen Wert $P_i$, der dem jeweiligen Schwellwert $a_i$ zugeordnet ist. Das feste Zeitintervall $P_{max} = max (P_i)$ ist ebenfalls fest vorgegeben und geringfügig größer oder gleich der Übergangszeit $T_u$. Hierbei wird die Übergangszeit oder Verzugszeit $T_u$ aus der Antwortfunktion der Regelung aus dem Schnittpunkt der Wendetangente mit der t-Achse bestimmt.

Die EP 0 280 752 A1 zeigt und beschreibt ein Verfahren und eine Vorrichtung zur Raumtemperaturregelung. Die bekannte Temperaturregelung weist eine Regeleinrichtung auf, welche Stellsignale an das Stellglied des Wärmeerzeugers, das Stellglied der Heizkreisumwälzpumpe bzw. das Stellglied des Umschaltventils abgibt. Der Regeleinrichtung werden Signale über die Soll-Temperatur, die Ist-Temperatur sowie ggf. die Stellung des Umschaltventils zugeführt, Hierbei ist die Ist-Temperatur eine im Raum gemessene Lufttemperatur, eine Wandtemperatur, die Temperatur im Vorlauf des Wärmeträgermediums oder die Außentemperatur. Die Stellgröße des Reglers zeigt ein Zwei-Punkt-Verhalten. Das von der Regeleinrichtung an einem ersten Ausgang ausgegebenes Signal beinhaltet einen EIN-Befehl, solange die Temperaturdifferenz zwischen Ist-Temperatur und Soll-Temperatur größer als eine vorgegebene Temperaturdifferenz ist. Ein AUS-Signal wird abgegeben, wenn die Ist-Temperatur innerhalb der vorgegebenen Temperaturtoleranz um die Solitemperatur liegt. Die Regelung weist ferner einen Ausgang auf, an dem ein weiteres Stellsignal abgegeben wird. Dieses wird an die Stellglieder weitergeleitet, um ein sicheres Anlaufen zu gewährleisten. Das Stellsignal wird abgegeben, sobald die Temperaturdifferenz zwischen der Ist-Temperatur und der Soll-Temperatur größer wird als die vorgegebene Temperaturdifferenz und kann ggf. um eine kleine Zeit gegenüber den Schaltzeitpunkten verzögert eingeschaltet werden. Es ist femer vorgesehen, die Dauer des Signals am zweiten Ausgang der Regeleinrichtung nach einer zweckmäßig vorgegebenen Zeitdauer zu beenden, die von Betriebsparametern des Heizsystems abhängt. Der Zeitpunkt des Abschaltens kann hierbei unabhängig von der Ist-Temperatur bzw. dem um die Soll-Temperatur liegenden Temperaturbereich festgelegt werden.

Der DE 37 08 449 A1 ist ein Verfahren zur Steuerung einer Fußbodenheizung zu entnehmen, bei dem die Regelung durch ein periodisches Ein- und Ausschalten der Wärmezufuhr für jeden Raum erfolgt. Die Heizkreisventile eines jeden Raumes werden von einem Steuergerät angesteuert, welches zwei digital kodierbare Zeitglieder aufweist. Die Werte für die Einschaltperiode sind vom Anlagenhersteller voreingestellt und betragen 26 bis 36 Minuten. Nach Ablauf der Zeitspanne startet das zweite Zeitglied, welches vom Benutzer kodiert wird und die Ausschaltzeit festlegt. Die Ausschaltzeit beträgt 0 bis 24 Minuten. Während der Ausschaltzeit führt der Ausgang des Steuergeräts Spannung und die Heizkreisventile schließen. Nach Ablauf der Ausschaltzeit ist der Steuergeräteausgang wieder spannungslos, so dass dann die Heizkreisventile wieder bis zum Ende der Einschaltperiode öffnen.

Schließlich offenbart die DE 35 39 327 A1 ein Verfahren zur Steuerung einer Wärmequelle und ein entsprechendes Steuergerät, bei dem mehrere, auf unabhängigen Solltemperaturen liegende Verbraucher gespeist werden. Hierbei ist vorgesehen, dass jeweils der höhere der vorgegebenen Temperatur-Sollwerte als Führungsgröße für den Wärmeerzeuger vorgesehen ist. Hierbei kann der Vorlauftemperaturregter der bekannten Zentralheizungsanlage als Zwei-Punkt-Regler ausgebildet sein.

Aufgabe der vorliegenden Erfindung ist es, eine verbesserte Regelung für Fußbodenheizungen oder kombinierte Fußboden- und Radiatorheizungen vorzuschlagen, mit der die Regelgüte erhöht und die Abweichungen zwischen Ist- und Sollwert der Regelgröße verkleinert werden.

Mit der Erfindung wird diese Aufgabe durch die Merkmale des Patentanspruchs 1 gelöst.

Erfindungsgemäß wird die Aufgabenstellung durch eine Regelung für eine Fußbodenheizung oder eine kombinierte Fußboden- und Radiatorheizung gelöst, bei der zumindest der Regler für die Fußbodenheizung, bspw. ein PI- oder PID-Regler, ein stetiges Ausgangssignal an ein zugeordnetes Stellglied, bspw. ein Ventil, ausgibt und das dem Regler zugeordnete Stellglied eine Zwei-Punkt-Charakteristik aufweist. Das stetige Ausgangssignal des Reglers wird in ein pulsweitenmoduliertes Zwei-Punkt-Signal mit zwei möglichen Stellbefehlen umgewandelt, indem während einer vorgegebenen Periodendauer für eine von dem stetigen Ausgangssignal des Reglers abhängige Pulsdauer der erste Stellbefehl, bspw. ein AUF-Befehl, und für die verbleibende Pulspause der zweite Stellbefehl, bspw. ein ZU-Befehl, gegeben wird. Erfindungsgemäß wird hierbei vorgeschlagen, dass die Pulsdauer und -pause und/oder die Periodendauer von Stellgliedkenngrößen, bspw. Ventilkenngrößen, abhängen. Durch diese spezielle Form der proportionalen Umsetzung eines stetigen Signals in ein pulsweitenmoduliertes Zwei-Punkt-Signal zur Ansteuerung der Stellglieder können die dynamischen Eigenschaften von Stellgliedern unterschiedlicher Hersteller, die Einfluss auf das Verhalten des gesamten Regelkreises haben, berücksichtigt werden. Dazu gehen sie bspw. als Reglerparameter für die Puls- und/oder Periodendauer in die Regelung ein.

Wesentliche Stellgliedkenngrößen sind die Totzeit des Stellglieds, die die Reaktionszeit von der Ausgabe des Stellbefehls bis zur tatsächlichen Reaktion des Stellglieds angibt, und die Stellzeit, die benötigt wird, um das Stellglied in den gewünschten Zustand zu bringen. Daher wird erfindungsgemäß vorgeschlagen, dass die Pulsdauer und die Pulspause von der Totzeit des Stellglieds, der sich aus der Stellcharakteristik des Stellglieds ergebenden Stellzeit und/ oder dgl. abhängen.

Die Stellcharakteristik gibt an, welche Auswirkungen sich während der Änderungen am Stellglied auf den Regelkreis ergeben. Da diese Auswirkungen häufig nicht-linear sind, derartige Nicht-Linearitäten aber möglicherweise nur schwierig zu berücksichtigen sind, kann die Stellcharakteristik linear angenähert werden. Diese Näherung wird immer besser, je kürzer die Stellzeit relativ zur Periodendauer der Pulsweitenmodulation ist.

Die Periodendauer sollte größer sein als die Summe der Tot- und Stellzeiten für den ersten und den zweiten Stellbefehl (minimale Zyklusstellzeit), um eine wirksame proportionale Umsetzung des stetigen Ausgangssignals des übergeordneten Reglers in eine Stellgröße für das Stellglied erreichen zu können.

Umgekehrt sollte die Periodendauer kleiner sein als die kleinste dominante Streckenzeitkonstante der Regelstrecke, um noch eine gute Steuerbarkeit des zeitlichen Streckenverhaltens zu gewährleisten. Ein vernünftiger Grenzwert ist etwa ein 1/10 der kleinsten dominanten Streckenzeitkonstante.

Vorzugsweise kann vorgesehen werden, dass bei der erfindungsgemäßen Regelung zumindest ein Reglerparameter vom Arbeitspunkt des Reglers der Fußboden- und/oder Radiatorheizung abhängt. Untersuchungen haben gezeigt, dass konstante Reglerparameter nicht in allen Arbeitspunkten zu einer gleichbleibenden Regelgüte führen. Vielmehr ergeben sich bei gleichbleibenden Bedingungen, wie Außentemperatur, Vorlauftemperatur oder dgl., Schwingungen der Raumtemperatur um den Sollwert. Grund hierfür ist eine arbeitspunktabhängige Streckenverstärkung des Systems. Die Parameter des Fußbodenheizungsreglers werden daher erfindungsgemäß in Abhängigkeit vom Arbeitspunkt der Regelung angepasst, so dass sie für jeden Arbeitspunkt - und nicht nur für einen vorgegebenen Referenzarbeitspunkt - optimal gewählt sind. Daraus resultiert eine Verbesserung der Regelgüte des Fußbodenheizungsreglers. Dasselbe Prinzip lässt sich auch für eine Radiatorheizung und insbesondere eine kombinierte Fußboden- und Radiatorheizung anwenden.

Eine besonders gute Regelgüte lässt sich erreichen, wenn ein vom Arbeitspunkt des Reglers abhängiger Reglerparameter selbsttätig an den Arbeitspunkt angepasst wird. So werden die Reglerparameter immer optimal gewählt, ohne dass dies bspw. manuell durch Vorwahl bestimmter Regelungsszenarien, bspw. Anpassung an leichte oder schwere Regler, vorgegeben werden müsste.

Im Sinne einer einfachen Adaption der Reglerparameter ist bei der erfindungsgemäßen Regelung die Abhängigkeit des Reglerparameters vom Arbeitspunkt linear proportional zur Abweichung des Arbeitspunkts von einem fest vorgegebenen Referenzarbeitspunkt. Die Abweichung von dem Referenzarbeitspunkt ist durch die Regelung einfach zu ermitteln und kann dann durch einen geeignet gewählten Proportionalitätsfaktor berücksichtigt werden.

Besonders gute Regelergebnisse lassen sich erreichen, wenn die vom Arbeitspunkt des PI- oder PID-Reglers abhängigen Reglerparameter die Sprunghöhe und die Nachstellzeit sind.

Vorzugsweise kann außerdem eine Regelung für eine Fußboden- und Radiatorheizung vorgesehen werden, bei der der Regelkreis für die Fußbodenheizung und der Regelkreis für die Radiatorheizung jeweils mit einem eigenen Sollwert für den ihnen zugeordneten Regler geregelt werden. Zur Verbesserung der Regelgüte wird vorzugsweise vorgeschlagen, die jeweiligen Sollwerte für die Fußbodenheizung und die Radiatorheizung durch Übertragungsglieder aufeinander abzustimmen, indem die Übertragungsglieder aus der Regelabweichung des Gesamtsystems, bspw. der Abweichung der Ist-Raumtemperatur von der Soll-Raumtemperatur, die Sollwerte für die Regelkreise der Fußbodenheizung und der Radiatorheizung ermitteln. Damit können die dynamischen Eigenschaften des Reglers für die Radiatorheizung und des Reglers für die Fußbodenheizung so aufeinander abgestimmt werden, dass das Gesamtsystem ein verbessertes Verhalten aufweist. Bspw. ist es durch eine spezielle Wahl der Übertragungsglieder auch möglich, nur die Parameter des Reglers der Fußbodenheizung und/oder der Radiatorheizung insbesondere wie zuvor beschrieben anzupassen.

In einer besonderen Ausführungsform der erfindungsgemäßen Regelung stellen die Übertragungsglieder dynamische Filter dar, die sich ändernde Zustände der Regelstrecke berücksichtigen.

Da die Implementierung derartiger dynamischer Filter unter Umständen nur aufwendig zu realisieren ist, können für die Übertragungsglieder auch konstante Verstärkungsfaktoren gewählt werden.

In einer bevorzugten Ausführungsform sind die Regler für die Fußbodenheizung und/oder die Radiatorheizung PI- oder PID-Regler, mit denen sich ein gutes Regelverhalten erreichen lässt.

Ferner hat es sich bei der erfindungsgemäßen Regelung als vorteilhaft erwiesen, dass die Kreisverstärkung für den Regelkreis der Fußbodenheizung kleiner ist als die Kreisverstärkung für den Regelkreis der Radiatorheizung. Dadurch wird der Einfluss der Totzeit der vergleichsweise trägen Fußbodenheizung verringert.

Weitere Vorteile und Merkmale der erfindungsgemäßen Regelung ergeben sich auch aus der nachfolgenden Beschreibung eines Ausführungsbeispiels und der Zeichnung.

Es zeigen:

Fig. 1 ein Flussdiagramm mit der Struktur einer erfindungsgemäßen Regelung für eine kombinierte Fußboden- und Radiatorheizung und

Fig. 2 ein Diagramm mit einer Darstellung des Prinzips der Pulsweitenmodulation für ein Zwei-Punkt-Ventil als Stellglied.

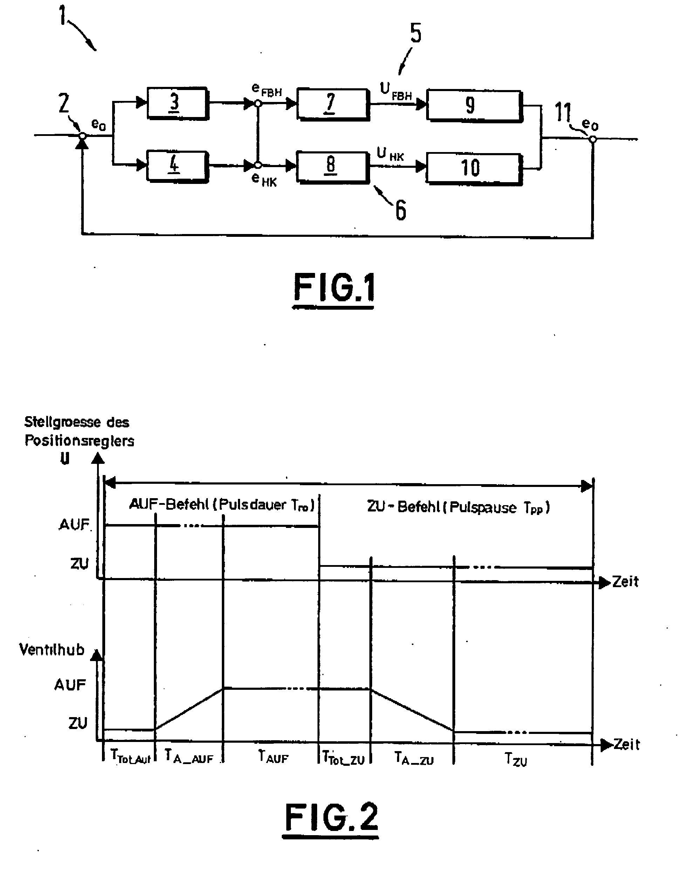

Bei der in Fig. 1 schematisch dargestellten Regelung 1 für eine kombinierte Fußboden- und Radiatorheizung handelt es sich um einen Einzelraumtemperaturregler, der die gesetzlichen Vorgaben aus der Heizungsanlagen-Verordnung erfüllt. Es versteht sich, dass die Regelung für reine Fußbodenheizungen in entsprechender Weise funktioniert, wobei hierbei auf die für die Radiatorregelung erforderlichen Schritte und Elemente verzichtet werden kann.

An einer Vergleichsstelle 2 wird die aktuell gemessene Ist-Raumtemperatur mit einer der Regelung vorgegebenen Soll-Raumtemperatur verglichen und aus der Differenz dieser Temperaturwerte die Regelabweichung $e_0$ des Gesamtsystems bestimmt. Diese Regelabweichung eo wird sowohl dem Übertragungsglied 3 der Fußbodenheizung als auch dem Übertragungsglied 4 der Radiatorheizung zugeleitet.

Die Übertragungsglieder 3, 4 haben die Aufgabe, aus der Regelabweichung eo des Gesamtsystems jeweils separate Regelabweichungen $e_{FBH}$ und $e_{HK}$ des Fußbodenregelkreises 5 bzw. Radiatorregelkreises 6 zu ermitteln. Da beide Regelabweichungen $e_{FBH}$ und $e_{HK}$ von den Übertragungsgliedern 3 und 4 aus der Regelabweichung $e_0$ des Gesamtsystems abgeleitet wurden, kann die Sollwertführung der separaten Regelkreise 5, 6 mit den unterschiedlichen Regelabweichungen $e_{FBH}$ und $e_{HK}$ als Korrektur der separaten Kreisverstärkungen mit einer Regelabweichung $e_0$ aufgefasst werden. Durch eine geeignete Wahl der Übertragungsglieder 3, 4 werden daher der Fußbodenregelkreis 5 und der Radiatorregelkreis 6 aufeinander abgestimmt.

Eine einfache Wahl für die Übertragungsglieder 3, 4 sind konstante Verstärkungsfaktoren, die die Last zwischen den beiden Regelkreisen 5, 6 proportional aufteilen. Es ist jedoch auch möglich, die Übertragungsglieder 3, 4 als dynamische Filter auszubilden, die je nach Zustand der Regelstrecke unterschiedliche Werte annehmen.

Die separaten Regelabweichungen $e_{FBH}$ bzw. $e_{HK}$ werden den jeweiligen Reglern 7 bzw. 8 der Fußbodenheizung bzw. Radiatorheizung zugeleitet. Bei den Reglern 7, 8 handelt es sich vorzugsweise um PI- oder PID-Regler.

Untersuchungen insbesondere bei Fußbodenheizungen haben gezeigt, dass die Raumtemperatur trotz gleichbleibender äußerer Bedingungen um den angestrebten Sollwert schwingt. Grund hierfür ist eine arbeitspunktabhängige Streckenverstärkung des Systems, die durch eine Anpassung der Reglerparameter des PI- bzw. PID-Reglers 7, 8 ausgeglichen werden kann. Dazu werden insbesondere die Sprunghöhe und die Nachstellzeit proportional zur Differenz zwischen dem tatsächlichen Arbeitspunkt und einem Referenzarbeitspunkt angepasst. Dies erfolgt bei einem PI-Regler bspw. nach folgendem Ansatz:

$$K_p = K_p^{*} + KKP_{ADP} \; (XS_R^* - XS_R) \qquad (1.1)$$

$$T_N = T_N^* + KTN_{ADP} \; (XS_R^* - XS_R) \qquad (1.2)$$

wobei $K_p$ die Sprunghöhe, $T_N$ die Nachstellzeit und $K_P^*$ und $T_N^*$ die entsprechenden im Referenzarbeitspunkt $XS_R^*$

optimierten Reglerparameter sind. KKP und KTN sind Proportionalitätskonstanten.

Handelt es sich um stetige Stellglieder bzw. -antriebe, können die stetigen Ausgangssignale $y_{FBH}$ bzw. $y_{HK}$ die Stellglieder direkt steuern. Bei der beschriebenen Ausführungsform sind die Stellglieder 9, 10 jedoch Zwei-Punkt-Regler, die nur einen AUF- und einen ZU-Befehl umsetzen können. Zur Ansteuerung der Stellglieder 9, 10 findet daher eine Umsetzung der stetigen Signale $y_{FBH}$ und $y_{HK}$ in pulsweitenmodulierte Zwei-Punkt-Signale, die Stellgrößen $u_{FBH}$ und $u_{HK}$ für die Stellglieder 9, 10 , statt.

Die Wirkungsweise der Pulsweitenmodulation im Zusammenhang mit einem Zwei-Punkt-Stellglied ist in Fig. 2 verdeutlicht. Diese Darstellung ist für beide Regelkreise 5, 6 gültig, so dass nachfolgend auf die Indizes FBH und HK verzichtet wird.

Gegen die obere Zeitachse ist in Fig. 2 die Stellgröße u eines als Positionsregler bezeichneten Stellglieds aufgetragen, die entsprechend der Zwei-Punkt-Regelung nur die Zustände AUF und ZU zulässt, wobei der AUF-Zustand als Pulsdauer, der ZU-Zustand als Pulspause und die Summe beider Zustände als Periodendauer bezeichnet werden. Gegen die untere Zeitachse ist die tatsächliche Stellung des Stellgliedes aufgetragen, die bei der Regelung 1 der Ventilhub eines Ventils zur Regelung des Heizmitteldurchflusses ist.

Die tatsächliche Stellung des Ventilhubs während des AUF-Befehls (Pulsdauer) gliedert sich in drei Phasen. In der ersten Phase des AUF-Befehls ist der Ventilhub tatsächlich noch geschlossen. Diese Zeit ist die Totzeit $T_{Tot\_AUF}$, während der das Ventil noch nicht auf den AUF-Befehl reagiert hat. Danach folgt eine zweite Phase, in der sich der Ventilhub stetig bis zur maximalen Öffnung vergrößert. Dies ist die Stellzeit $T_{A\_AUF}$. In der nachfolgenden dritten Phase $T_{AUF}$ ist der Ventilhub dann vollständig geöffnet. Entsprechende Phasen mit den Zeiten $T_{Tot\_ZU}$, $T_{A\_ZU}$ und Tzu gibt es auch während des ZU-Befehls (Pulspause).

Die Pulsdauer wird nun so berechnet, dass das prozentuale Verhältnis der Fläche unter der Kurve des Ventilhubs zur maximalen Gesamtfläche während der Periodendauer dem stetigen Signal y des Reglers entspricht. Dabei hängen die Totzeit $T_{Tot\_AUF}$ und die Stellzeit $T_{A\_AUF}$ von den Eigenschaften des verwendeten Stellglieds ab und müssen entsprechend berücksichtigt werden.

Die Periodendauer sollte konstant gewählt werden, wobei die Periodendauer größer sein muss als die Summe der Tot- und Stellzeiten des AUF- und ZU-Befehls, damit eine proportionale Regelung noch möglich ist. Umgekehrt sollte die Periodendauer jedoch nicht größer sein als etwa 1/10 der kleinsten dominanten Streckenzeitkonstante, um noch eine gute Steuerbarkeit des zeitlichen Streckenverhaltens zu gewährleisten.

Nach Durchlaufen der Regelstrecke wird die Ist-Temperatur an einem Messpunkt 11 bestimmt und an die Vergleichsstelle 2 rückgekoppelt.

Mit der erfindungsgemäßen Regelung 1 für eine Fußbodenheizung bzw. eine kombinierte Fußboden- und Radiatorheizung wurde die Regelgüte für eine Einzelraumregelung erheblich verbessert, indem die Parameter der Regler 7, 8 von dem Arbeitspunkt abhängen, bei der Pulsweitenmodulation die Stellgliedkenngrößen berücksichtigt werden und bei der Kombination von Fußboden- und Radiatorheizung beide Regelkreise 5, 6 aufeinander abgestimmt werden. Damit werden für die Regelung wichtige Eigenschaften und Parameter der Regelstrecke berücksichtigt und optimiert. Natürlich bewirkt auch jede der beschriebenen Maßnahmen für sich eine Verbesserung der Regelgüte, die durch die Kombination der Maßnahmen aber noch weiter erhöht wird.

**Bezugszeichenliste:**

1 Regelung
2 Vergleichsstelle
3 Übertragungsglied der Fußbodenheizung
4 Übertragungsglied der Radiatorheizung
5 Fußbodenregelkreis
6 Radiatorregelkreis
7 Regler der Fußbodenheizung
8 Regler der Radiatorheizung
9 Stellglied der Fußbodenheizung
10 Stellglied der Radiatorheizung
11 Messpunkt

$e_0$ Regelabweichung des Gesamtsystems
$e_{FBH}$ Regelabweichung des Fußbodenregelkreises
$e_{HK}$ Regelabweichung des Radiatorregelkreises
$u_{FBH}$ Stellgröße für Stellglied der Fußbodenheizung

| | |
|---|---|
| $u_{HK}$ | Stellgröße für Stellglied der Radiatorheizung |
| $T_{Tot\_AUF}$ | Totzeit des AUF-Befehls |
| $T_{A\_AUF}$ | Stellzeit des AUF-Befehls |
| $T_{AUF}$ | Offenzeit |
| $T_{Tot\_ZU}$ | Totzeit des ZU-Befehls |
| $T_{A\_ZU}$ | Stellzeit des ZU-Befehls |
| $T_{ZU}$ | Schlusszeit |

**Patentansprüche**

1. Regelung für Fußbodenheizungen oder kombinierte Fußboden- und Radiatorheizungen, bei der zumindest ein Regler (7) für die Fußbodenheizung, bspw. ein PI- oder PID-Regler, ein stetiges Ausgangssignal an ein zugeordnetes Stellglied (9)- ausgibt und das dem Regler (7) zugeordnete Stellglied (9) eine Zwei-Punkt-Charakteristik aufweist, wobei das stetige Ausgangssignal des Reglers (7) in ein pulsweitenmoduliertes Zwei-Punkt-Signal mit zwei möglichen Stellbefehlen umgewandelt wird, indem für eine von dem stetigen Ausgangssignal des Reglers (7) abhängige Pulsdauer der erste Stellbefehl und für eine Pulspause der zweite Stellbefehl gegeben wird, **dadurch gekennzeichnet, dass** das pulsweitenmodulierte Zwei-Punkt-Signal eine vorgegebene Periodendauer aufweist und dass die Pulsdauer und-pause und/oder die Periodendauer von Stellgliedkenngrößen, insbesondere Ventilkenngrößen, abhängen.

2. Regelung nach Anspruch 1, **dadurch gekennzeichnet, dass** die Pulsdauer und die Pulspause von der Totzeit des Stellglieds (9), der sich aus der Stellcharakteristik des Stellglieds (9) ergebenden Stellzeit und/oder dgl. abhängen.

3. Regelung nach Anspruch 2, **dadurch gekennzeichnet, dass** die Stellcharakteristik linear angenähert wird.

4. Regelung nach einem der Ansprüche 1 bis 3, **dadurch gekennzeichnet, dass** die Periodendauer größer ist als die minimale Zyklusstellzeit, die sich aus den Tot- und Stellzeiten für den ersten und den zweiten Stellbefehl ergibt.

5. Regelung nach einem der Ansprüche 1 bis 4, **dadurch gekennzeichnet, dass** die Periodendauer kleiner ist als 1/10 der kleinsten dominanten Streckenzeitkonstante der Regelstrecke (1).

6. Regelung nach einem der vorhergehenden Ansprüche, **dadurch gekennzeichnet, dass** zumindest ein Reglerparameter in Abhängigkeit vom beitspunkt eines Reglers (7,8) der Fußboden- und/oder Radiatorheizung verändert wird.

7. Regelung nach Anspruch 6, **dadurch gekennzeichnet, dass** ein vom Arbeitspunkt abhängiger Reglerparameter selbsttätig an den Arbeitspunkt angepasst wird.

8. Regelung nach Anspruch 6 oder 7, **dadurch gekennzeichnet, dass** die Abhängigkeit des Reglerparameters vom Arbeitspunkt linear proportional zur Abweichung des Arbeitspunkts von einem vorgegebenen Referenzarbeitspunkt ist.

9. Regelung nach einem der Ansprüche 6 bis 8, **dadurch gekennzeichnet, dass** die vom Arbeitspunkt des Reglers (7,8) abhängigen Reglerparameter die Sprunghöhe und die Steigung der Nachstellzeit sind.

10. Regelung für kombinierte Fußboden- und Radiatorheizungen nach einem der vorhergehenden Ansprüche, **dadurch gekennzeichnet, dass** der Regelkreis (5) für die Fußbodenheizung und der Regelkreis (6) für die Radiatorheizung jeweils mit einem eigenen Sollwert für den ihnen zugeordneten Regler (7, 8) geregelt werden, wobei die Sollwerte für die Fußbodenheizung und die Radiatorheizung durch Übertragungsglieder (3, 4) aufeinander abgestimmt werden, indem die Übertragungsglieder (3, 4) aus der Regelabweichung ($e_0$) des Gesamtsystems die Sollwerte für die Regelkreise (5, 6) der Fußbodenheizung und der Radiatorheizung ermitteln.

11. Regelung nach Anspruch 10, **dadurch gekennzeichnet, dass** die Übertragungsglieder (3, 4) dynamische Filter darstellen.

12. Regelung nach Anspruch 10, **dadurch gekennzeichnet, dass** die Übertragungsglieder (3, 4) konstante Verstärkungsfaktoren sind.

**13.** Regelung nach einem der Ansprüche 10 bis 12, **dadurch gekennzeichnet, dass** die Regler (7, 8) für die Fußbodenheizung und/oder die Radiatorheizung PI- oder PID-Regler sind.

**14.** Regelung nach einem der Ansprüche 10 bis 13, **dadurch gekennzeichnet, dass** die Kreisverstärkung für den Regelkreis (5) der Fußbodenheizung kleiner ist als die Kreisverstärkung (6) für den Regelkreis der Radiatorheizung.

**Claims**

**1.** A control system for floor heating or a combined floor/radiator heating wherein at least one controller (7) for the floor heating, for example a PI- or PID- controller, transmits a permanent output signal to an associated actuator (9) and wherein the actuator (9) associated to controller (7) comprises a two-point characteristic, with the permanent output signal of controller (7) being converted into a pulse-width-modulated two-point signal with two possible actuating orders in that the first actuating order is issued for a pulse duration dependent on the permanent output signal of controller (7) and the second actuating order is issued for a pulse break, **characterized in that** the pulse width-modulated two-point signal is of a predetermined periodic duration and that the pulse duration and pulse break and/or the periodic duration are dependent on characteristic values of the actuator, in particular, on valve characteristic values.

**2.** A control according to claim 1, **characterized in that** the pulse duration and the pulse break are dependent on the dead time of the actuator (9) and on the actuating time resulting from the actuating characteristic of the actuator (9) and/or the like.

**3.** A control according to claim 2, **characterized in that** the actuating characteristic is linearly approximated.

**4.** A control according to any one of claims 1 to 3, **characterized in that** the periodic duration exceeds the minimum cyclical actuating time resulting from the dead and actuating times for the first and second actuating orders.

**5.** A control according to any one of claims 1 to 4, **characterized in that** the periodic duration is less than 1/10 of the minimum dominant time constant of the controlled system (1).

**6.** A control according to any one of the preceding claims, **characterized in that** at least one parameter of the controller is changed in response to the work point of a controller (7, 8) of the floor and/or radiator heating.

**7.** A control according to claim 6, **characterized in that** a parameter of the controller dependent on the work point is automatically adjusted to the said work point.

**8.** A control according to claims 6 or 7, **characterized in that** the dependence of the controller parameter on the work point is in linear proportion to the deviation of the work point from a predetermined reference work point.

**9.** A control according to any one of claims 6 to 8, **characterized in that** the controller parameters dependent on the work point of the controller (7, 8) are the jump level and the slope of the readjusting time.

**10.** A control for a combined floor and radiator heating according to any one of the preceding claims, **characterized in that** the control circuit (5) for the floor heating and the control circuit (6) for the radiator heating are respectively controlled on a special nominal value for the controller (7, 8) associated to them, with the nominal values for the floor heating and the radiator heating, through transmission elements (3, 4), being adjusted to one another **in that** the transmission elements (3, 4) determine the nominal values for the control circuits (5, 6) of the floor heating and of the radiator heating from the control deviation ($e_o$) of the general system.

**11.** A control according to claim 10, **characterized in that** the transmission elements (3, 4) constitute dynamic filters.

**12.** A control system according to claim 10, **characterized in that** the transmission elements (3, 4) are constant amplifying factors.

**13.** A control according to any one of claims 10 to 12, **characterized in that** the controllers (7, 8) for the floor heating and/or the radiator heating are PI- or PID-controllers.

**14.** A control according to claims 10 through 13, **characterized in that** the circuit amplification for the control circuit (5) of the floor heating is less than the circuit amplification (6) for the control circuit of the radiator heating.

**Revendications**

**1.** Régulation pour un chauffage par le sol ou un chauffage mixte sol/radiateurs où au moins un régulateur (7) pour le chauffage par sol, par exemple un P- ou PID-régulateur, délivre un signal de sortie permanent à un élément de réglage (9) associé, l'élément de réglage associé au régulateur (7) comportant une caractéristique à deux points, le signal de sortie permanent du régulateur étant converti dans un signal à deux points de largeur d'impulsion modulée avec deux ordres de réglage possibles en donnant pour une durée d'impulsion dépendante du signal de sortie permanent du régulateur (7) un ordre de réglage premier et l'ordre de réglage secondaire pour un intervalle d'impulsion, **caractérisé en ce que** le signal à deux points de largeur d'impulsion modulée comporte une durée périodique prédéterminée, et que la durée d'impulsion et l'intervalle d'impulsion et/ou la durée périodique sont dépendants des valeurs caractéristiques d'élément de réglage, en particulier des valeurs caractéristiques de soupape.

**2.** Régulation selon la revendication 1, **caractérisé en ce que** la durée d'impulsion et l'intervalle d'impulsion sont dépendants du temps mort de l'élément de réglage (9) et du temps de réglage résultant de la caractéristique de réglage de l'élément réglage et/ou autre choses semblables.

**3.** Régulation selon la revendication 2, **caractérisé en ce que** la caractéristique au réglage s'approche de manière linaire.

**4.** Régulation selon l'une des revendications 1 à 3, **caractérisé en ce que** la durée périodique est plus large que le temps de réglage cyclique résultant du temps mort et du temps au réglage pour l'ordre de réglage premier et secondaire.

**5.** Régulation selon l'une des revendications 1 à 4, **caractérisé en ce que** la durée périodique est moins de 1/10 de la constante de temps dominante au minimum de l'installation réglée (1).

**6.** Régulation selon l'une des revendications précédentes, **caractérisé en ce qu'**au moins un paramètre du régulateur sera changé en réponse du point de travail du régulateur (7, 8) du chauffage par le sol ou un chauffage mixte sol/radiateurs.

**7.** Régulation selon la revendication 6, **caractérisé en ce qu'**un paramètre de réglage dépendant du point de travail est automatiquement adaptée au point de travail.

**8.** Régulation selon les revendications 6 ou 7, **caractérisé en ce que** la dépendance du paramètre du régulateur du point de travail est linéairement proportionnel à la déviation du point de travail d'un point à référence.

**9.** Régulation selon l'une des revendications 6 à 8, **caractérisé en ce que** les paramètres du régulateur dépendants du point de travail du régulateur (7, 8) forment l'amplitude et le pas du temps de réglage.

**10.** Régulation pour un chauffage mixte sol/radiateurs selon l'une des revendications précédentes, **caractérisé en ce que** le circuit réglage (5) pour le chauffage par le sol et le circuit réglage (6) pour le chauffage radiateurs sont réglés avec une valeur prescrite spéciale pour le régulateur (7, 8) associé à eux, les valeurs prescrites pour le chauffage par le sol et le chauffage radiateurs étant ajustées l'un à l'autre par des éléments de transmission (3, 4) **en ce que** les éléments de transmission (3, 4) calculent les valeurs prescrites pour les circuits réglage (5, 6) du chauffage par le sol et le chauffage radiateurs de la déviation de réglage (eo) du système entier.

**11.** Régulation selon la revendication 10, **caractérisé en ce que** les éléments de transmission (3, 4) forment des filtres dynamiques.

**12.** Régulation selon la revendication 10, **caractérisé en ce que** les éléments de transmission (3, 4) forment des facteurs d'amplification constants.

**13.** Régulation selon les revendications 10-12, **caractérisé en ce que** les régulateurs (7, 8) pour le chauffage par le sol et/ou le chauffage radiateurs sont des PI- ou PID-régulateurs.

**14.** Régulation selon l'une des revendications 10 à 13, **caractérisé en ce que** l'amplification de circuit pour le circuit réglage (5) du chauffage par le sol est moins que l'amplification de circuit (6) pour le circuit réglage du chauffage radiateurs.

## FIG.1

Stellgroesse des
Positionsreglers
U

AUF-Befehl (Pulsdauer $T_{ro}$)  ZU-Befehl (Pulspause $T_{pp}$)

AUF

ZU

→ Zeit

Ventilhub

AUF

ZU

$T_{Tot\_Auf}$  $T_{A\_AUF}$  $T_{AUF}$  $T_{Tot\_ZU}$  $T_{A\_ZU}$  $T_{ZU}$

→ Zeit

## FIG.2